# EUROPEAN PATENT SPECIFICATION

(11) **EP 3 039 922 B1**
(45) Date of publication and mention of the grant of the patent: **30.06.2021**
(21) Application number: 13756876.2
(22) Date of filing: 30.08.2013
(51) Int. Cl.: H04W 56/00

(54) **SYNCHRONIZATION OF A DEVICE IN COMMUNICATIONS**
SYNCHRONISATION EINES VORRICHTUNG IN DER KOMMUNIKATION
SYNCHRONISATION D'UN DISPOSITIF DANS DES COMMUNICATIONS

(43) Date of publication of application: 06.07.2016
(73) Proprietor: Nokia Solutions and Networks Oy, 02610 Espoo (FI)
(72) Inventor: PAJUKOSKI, Kari Pekka, FI-90240 Oulu (FI); FREDERIKSEN, Frank, DK-9270 Klarup (DK); TIIROLA, Esa Tapani, FI-90450 Kempele (FI); RATASUK, Rapeepat, Hoffman Estates, Illinois 60192 (US)
(74) Representative: Nokia EPO representatives
(86) International application number: PCT/EP2013/067956
(87) International publication number: WO 2015/028081

(56) References cited:
- "3rd Generation Partnership Project; Technical Specification Group Radio Access Network; Evolved Universal Terrestrial Radio Access (E-UTRA); Physical layer procedures (Release 11)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.3.0, 25 June 2013 (2013-06-25), pages 1-176, XP050692859, [retrieved on 2013-06-25]
- "3rd Generation Partnership Project; Technical Specification Group Radio Access Network; Evolved Universal Terrestrial Radio Access (E-UTRA); Medium Access Control (MAC) protocol specification (Release 11)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.3.0, 29 June 2013 (2013-06-29), pages 1-57, XP050712004, [retrieved on 2013-06-29]
- "3rd Generation Partnership Project; Technical Specification Group Radio Access Network; Evolved Universal Terrestrial Radio Access (E-UTRA); User Equipment (UE) procedures in idle mode (Release 11)", 3GPP STANDARD; 3GPP TS 36.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.4.0, 7 July 2013 (2013-07-07), pages 1-34, XP050712085, [retrieved on 2013-07-07]
- None

## Description

### Field of the invention

The exemplary and non-limiting embodiments of this invention relate generally to wireless communications networks, and more particularly to synchronization of communication devices.

### Background ART

The following description of background art may include insights, discoveries, understandings or disclosures, or associations together with dis-closures not known to the relevant art prior to the present invention but provided by the invention. Some such contributions of the invention may be specifically pointed out below, whereas other such contributions of the invention will be apparent from their context.

Machine type communications (MTC or M2M) enables machines to communicate directly with one another. Applications for mass MTC services may include machine type communications in smart power grid, smart metering, consumer products, health care, etc. Current mobile networks are designed for human-to-human communications, but are less optimal for M2M applications. The specification of the 3GPP Long Term Evolution System, LTE, "Physical Layer Procedures (Release 11) 36.213 11.3.0", defines separate procedures for initial downlink synchronization and initial uplink synchronization, which are an initial cell search for downlink synchronization and, subsequently, an initial random access procedure for uplink synchronization.

This application makes reference to U.S. Application Serial No. 13/939,092, filed on July 10, 2013.

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

Although the various aspects, embodiments and features of the invention are recited independently, it should be appreciated that all combinations of the various aspects, embodiments and features of the invention are possible and within the scope of the present invention as claimed.

### Brief description of the drawings

In the following the invention will be described in greater detail by means of exemplary embodiments with reference to the attached drawings, in which
Figure 1 shows a simplified block diagram illustrating exemplary system architecture;
Figure 2 shows a simplified block diagram illustrating exemplary apparatuses;
Figure 3 shows a messaging diagram illustrating an exemplary messaging event according to an embodiment of the invention;
Figure 4 shows a schematic diagram of a flow chart according to an exemplary embodiment of the invention:
Figure 5 shows a schematic diagram of a flow chart according to an exemplary embodiment of the invention

### Detailed description of SOME EMBODIMENTS

An exemplary embodiment relates to a fifth generation (5G) radio system, focusing especially on machine type communication (MTC), but it may also been seen as a general power efficiency improvement for various applications (such as smart phones).

Machine-like terminals including e.g. supervision cameras, vending machines, smart meters, human sensors, internet type of items etc. are envisioned to create a lot of traffic for further cellular networks. The main requirements for MTC communications include a low power consumption and cheap prices of devices. The requirement for low power consumption is typically more critical for MTC devices compared to typical mobile phones/smart phones. This is due to the fact that the battery of a handset may be easily charged whereas this is not generally the case with the MTC devices. For a certain type of MTC devices, a lifetime in the order of one or more years is required even with a clock-size battery. On the other hand, a cheap price may require that the MTC devices may have limited transceiver and receiver capabilities (compared to other devices).

The main requirements of 5G MTD (machine type device) include: it is able to consume or generate any amount of data within a short time frame, it may require a millisecond-level reaction time (or latency), it may also sleep for months and send a byte every now and then.

There are several MTC-specific radio technologies like ZigBee, Bluetooth 4.0, Low power WiFi, 802.11ah and IEEE 802.15.4x already. However, cellular MTC has evident benefits like ubiquitous coverage & global connectivity, and better QoS due to licensed spectrum and free (existing) signals available for synchronization.

An exemplary embodiment involves a novel cellular-based MTC concept targeted to a maximized battery life time and a minimized overhead for a cellular system. By means of an exemplary embodiment, 5G is expected to gradually become a predominant radio access technology for a diverse set of data applications.

In existing systems, battery draining is a challenge. In order to minimize power consumption, the active time of MTD should be minimized and sleeping time maximized accordingly. Thus, connections should be established quickly and released as soon as data exchange is complete to minimize a power amplifier (PA) active time in MTD (or UE), and thus also to minimize MTD (or UE) power consumption. In order to obtain a one year lifetime with a clock size battery, the time from the start to the end of transmission should be in the order of milliseconds.

Before the device is able to transmit any data, at least frequency synchronization needs to be established. To maintain synchronization over longer time periods requires a considerable amount of power because a high accuracy oscillator needs to be kept alive. Then, fast synchronization is needed.

The fast synchronization requires a very frequent synchronization signal which in turn introduces excessive power consumption and overhead. In many cases like with human sensors, the data exchange may happen directly between UE and MTD, resulting in further battery draining for UE when connected to the sensor (or other MTD).

Most of the existing MTC standards are focused on battery draining of an end device only. The total energy consumption is mostly not considered. For example, ZigBee is based on asynchronous access which is only minimizing the active time but has a negative impact on the power consumption on a receiver site because such asynchronous access requires the receiving device to listen continuously and therefore to use considerable power. Bluetooth 4.0 tries to keep power consumption on a low level in both ends of the link by waking up both master and slave synchronously. This introduces a trade-off between latency and the battery draining.

LTE is able to support a cellular type of MTC but the battery draining of the end device is far away from 5G target, due to a long synchronization time and access procedures.

An exemplary embodiment involves a synchronization and access procedure for MTC. An exemplary embodiment provides a solution to obtain a fast connection time with minimum battery draining for a cellular type of MTC. These are obtained by means of a novel synchronization and access procedure.

In an exemplary embodiment, a synchronisation signal is divided into a common broadcast signal (= a first synchronization signal) and a dedicated signal (= a second synchronization signal) which is transmitted only on a need basis.

The first synchronization signal only includes limited information and it may be frequently and periodically broadcasted from a network node (such as an enhanced node-B (eNode-B, eNB), a base station, or a user terminal) (periodicity is a trade-off between the latency and the overhead; one may also consider very high periodicities for the first synchronization signal, such as 1-2 ms). From the first synchronization signal, a device is able to obtain the necessary information to send a scheduling request and receive a scheduling grant (= accurate enough frequency/time synchronization) message. Furthermore, based on the first synchronization signal, the device may be able to receive a paging signal from the network. This paging signal may be different from a normal paging signal from the network.

The second synchronization signal is transmitted from the network node (e.g. eNB or UE) after the detection of the scheduling request from the device, and the second synchronization signal includes a capability to acquire full synchronization to operate in the cell.

It should be noted that the above procedure should not be mistaken for the traditional RACH-based procedure where UE first obtains full synchronization to the network before sending an initial access request (RACH). In the existing setup, UE may need to listen for quite a long time before obtaining the needed information on the cell capability and frame timing. Just the acquisition of the system information may take as long as 100-200 ms (to decode the needed broadcast channels). Even getting the frame timing for the existing LTE setup requires that UE listens for at least 40 ms to reach a system frame number update.

In a setup according to an exemplary embodiment, UE is able to be fed the needed information on a need basis to ensure fast access and configuration of UEs understanding of the cell (or cell area) configuration.

The first synchronization signal may include both a preamble part (to assist synchronization) and a message part. The synchronization preamble of the first synchronization signal may be network-area-specific (instead of being cell specific) in order to enable a fast detection on UE side (i.e. only very few first synchronization preambles need to be scanned by UE).

The bandwidth and time duration of the first synchronization signal may be lower than the bandwidth and time duration of the second synchronization signal in order to minimize the overhead. Thus, synchronization accuracy (in terms of which level of network information is available) based on the first signal may be lower than the accuracy offered from the second synchronization signal. A waveform and modulation used for transmitting the scheduling request may be selected such that it allows resistivity against synchronization errors. For example, there may be a specific time/frequency resource reserved for a scheduling request having more guard band/time in frequency and time compared to resources used for data transmission.

An exemplary embodiment may involve the following:
1. a first node (e.g. eNB (or UE)) sends a first synchronization signal periodically.
2. When data arrives in a buffer, a second node (e.g. UE) obtains a minimum synchronization needed to send the scheduling request and to receive the scheduling grant. This (coarse) synchronization is based on the first synchronization signal.
3. The second node sends the scheduling request.
4. The first node monitors scheduling request resources. If the first node detects a scheduling request, the first node transmits a second synchronization signal (which may contain accurate information on frame timing, subframe timing, time advance, network configuration, etc) together with a scheduling grant to the device.
5. When the second node has sent the scheduling request, the second node tries to decode/receive the second synchronization signal transmitted at a predetermined time window with reference to the scheduling request.
6. The second node detects the scheduling grant and starts transmitting the data based on the grant (the second synchronization signal may also include a timing advanced command related to UL transmission; it should be noted that the primary goal of the second synchronization signal is still to provide accurate DL synchronization for UE).

The same principle may also be used for communication between devices. In another exemplary embodiment related to D2D communication, the second synchronization signal (step 4) is transmitted from the device or UE instead of eNode-B.

A minimum synchronization in step 2 may be based on a reference signal associated to demodulation of network-area-specific information (instead of cell-specific information).

According to an exemplary embodiment, the network configures a certain profile for transmitting the first synchronization signal (in addition to the existing synchronization signals being used for initial access). The first synchronization signal has a predetermined (configurable) periodicity. The first synchronization signal is transmitted on predetermined resource elements. It may be possible to reuse existing signals (such as reference signals) as the first synchronization signal. eNB needs to provide sufficient information to the MTD devices about the properties of the first synchronization signal; UE dedicated and/or UE common higher layer signalling may be used for such purposes. The first synchronization signal may be transmitted within a certain geographical area consisting of multiple cells or Tx points.

In an exemplary embodiment, the initial access follows an existing cellular procedure (e.g. such as the one used in LTE/LTE-A):
- DL synchronization based on PSS/SSS,
- detection system information,
- random access procedure,
- RRC connection establishment, etc.

After the RRC connection has been established, an exemplary low-battery-consumption mode may be activated for a given UE (assuming that eNB has configured to utilize such a mode in the cell). UE is made aware of the properties of the first synchronization signal. UE is made aware of resources available to transmit the scheduling request; these resources may be dedicated or shared by multiple UEs (contention based); various type of messages (w/ or w/o UE identification) may be used as the scheduling request message; various type of signals may be used as the scheduling request, examples of such signals, following LTE terminology, include PUCCH format 1/1a/1 b, dedicated or contention based random access preamble, and/or random access message 3. UE may stop monitoring the cellular synchronization signals (such as PSS/SSS). In case UE has a reason to transmit a scheduling request, UE searches the first synchronization signal to acquire the initial synchronization. After the initial synchronization has been obtained (based on the first synchronization signal received from eNB), UE transmits the scheduling request SR using the first available resource. UE may search the first synchronization signal also in case UE has a reason to listen for paging signals. UE needs to make the initial synchronization before receiving the paging signal. The scheduling request SR is transmitted as a response to the reception of the paging signal. The procedure may continue after the SR transmission similarly as in the case of UE-initiated transmission. A paging procedure may be used as a dedicated notification when eNB wants to change parameters related to the first synchronization signal. Another option is to use a message part of the first synchronization signal (if such a message part has been configured).

An existing initial access procedure may be used as a fall-back scheme for the synchronization according to the exemplary embodiment. This may happen e.g. due to the fact that MTD is not any more within the geographical area of the configured first signal (in other words, it is not capable of receiving the first signal). UE may have a predetermined number of Tx opportunities defined before falling back to the initial access procedure.

An exemplary embodiment may be implemented in 5G cellular systems. An exemplary embodiment enables low battery draining of the device because of a shortened active time since part of synchronization is executed during a 'scheduling process', and because the frequent synchronization signal is transmitted from eNodeB (connected to an electric supply). An exemplary embodiment enables low latency, as the device is able to do synchronization fast due to the frequent first synchronization signal. An exemplary embodiment enables a high capacity thus enabling an efficient scheduled access for data.

Exemplary embodiments will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

The present invention is applicable to any user terminal, network node, server, corresponding component, and/or to any communication system or any combination of different communication systems that support synchronization of communication devices. The communication system may be a fixed communication system or a wireless communication system or a communication system utilizing both fixed networks and wireless networks. The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on LTE (or LTE-A) (long term evolution (advanced long term evolution)) network elements, without restricting the embodiment to such an architecture, however. The embodiments described in these examples are not limited to the LTE radio systems but can also be implemented in other radio systems, such as 3G, 4G, 5G, B4G, UMTS (universal mobile telecommunications system), GSM, EDGE, WCDMA, bluetooth network, WLAN, WiMAX or other fixed, mobile or wireless network. In an embodiment, the presented solution may be applied between elements belonging to different but compatible systems such as LTE and UMTS.

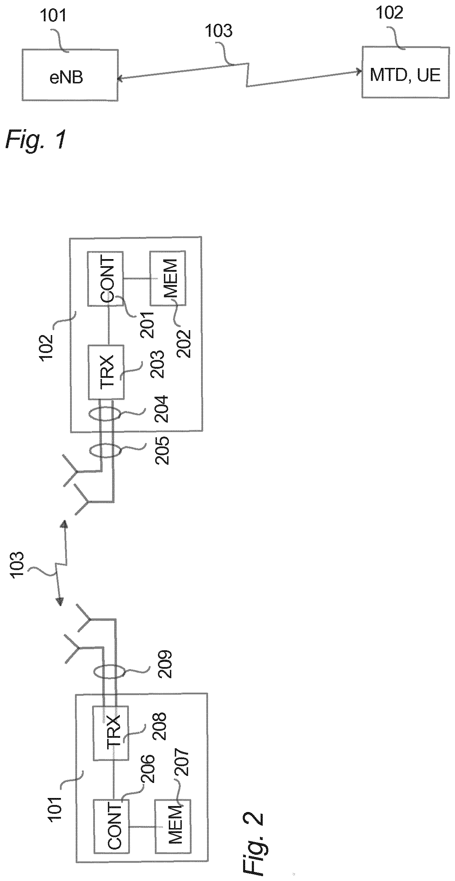

A general architecture of a communication system is illustrated in Figure 1. Figure 1 is a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for a synchronization and access procedure, are irrelevant to the actual invention. Therefore, they need not to be discussed in more detail here.

The exemplary radio system of Figure 1 comprises a network node 101 of a network operator. The network node 101 may include e.g. an LTE/LTE-A base station (eNB), radio network controller (RNC), or any other network element, or a combination of network elements. The network node 101 may be connected to one or more core network (CN) elements (not shown in Figure 1) such as a mobile switching centre (MSC), MSC server (MSS), mo-bility management entity (MME), gateway GPRS support node (GGSN), serving GPRS support node (SGSN), home location register (HLR), home sub-scriber server (HSS), visitor location register (VLR). In Figure 1, the radio net-work node 101 that may also be called eNB (enhanced node-B, evolved node-B) or network apparatus of the radio system, hosts the functions for radio resource management in a public land mobile network. Figure 1 shows one or more user equipment 102 or machine type devices 102 located in the service area of the radio network node 101. The user equipment refers to a portable computing device, and it may also be referred to as a user terminal. Such computing devices include wireless mobile communication devices operating with or without a subscriber identification module (SIM) in hardware or in software, including, but not limited to, the following types of devices: mobile phone, smart-phone, personal digital assistant (PDA), handset, laptop computer. In the example situation of Figure 1, the user equipment 102 is capable of connecting to the radio network node 101 via a connection 103. The apparatus 102 may also comprise a machine type device MTD.

Figure 2 is a block diagram of an apparatus according to an embodiment of the invention. Figure 2 shows a user equipment 102 (or a machine type device 102) located in the area of a radio network node 101. The user equipment 102 is configured to be in connection with the radio network node 101. The user equipment or UE 102 comprises a controller 201 operationally connected to a memory 202 and a transceiver 203. The controller 201 controls the operation of the user equipment 102. The memory 202 is configured to store software and data. The transceiver 203 is configured to set up and maintain a wireless connection 103 to the radio network node 101. The transceiver 203 is operationally connected to a set of antenna ports 204 connected to an antenna arrangement 205. The antenna arrangement 205 may comprise a set of antennas. The number of antennas may be one to four, for example. The number of antennas is not limited to any particular number. The user equipment 102 may also comprise various other components, such as a user interface, camera, and media player. They are not displayed in the figure due to simplicity. The radio network node 101, such as an LTE/LTE-A base station (eNode-B, eNB) comprises a controller 206 operationally connected to a memory 207, and a transceiver 208. The controller 206 controls the operation of the radio network node 101. The memory 207 is configured to store software and data. The transceiver 208 is configured to set up and maintain a wireless connection to the user equipment 102 within the service area of the radio network node 101. The transceiver 208 is operationally connected to an antenna arrangement 209. The antenna arrangement 209 may comprise a set of antennas. The number of antennas may be two to four, for example. The number of antennas is not limited to any particular number. The radio network node 101 may be operationally connected (directly or indirectly) to another network element (not shown in Figure 2) of the communication system, such as a radio network controller (RNC), a mobility management entity (MME), an MSC server (MSS), a mobile switching centre (MSC), a radio resource management (RRM) node, a gateway GPRS support node, an operations, administrations and maintenance (OAM) node, a home location register (HLR), a visitor location register (VLR), a serving GPRS support node, a gateway, and/or a server, via an interface. The embodiments are not, however, restricted to the network given above as an example, but a person skilled in the art may apply the solution to other communication networks provided with the necessary properties. For example, the connections between different network elements may be realized with internet protocol (IP) connections.

Although the apparatus 101, 102 has been depicted as one entity, different modules and memory may be implemented in one or more physical or logical entities. The apparatus may also be a user terminal which is a piece of equipment or a device that associates, or is arranged to associate, the user terminal and its user with a subscription and allows a user to interact with a communications system. The user terminal presents information to the user and allows the user to input information. In other words, the user terminal may be any terminal capable of receiving information from and/or transmitting in-formation to the network, connectable to the network wirelessly or via a fixed connection. Examples of the user terminals include a personal computer, a game console, a laptop (a notebook), a personal digital assistant, a mobile station (mobile phone), a smart phone, and a line telephone.

The apparatus 101, 102 may generally include a processor, controller, control unit or the like connected to a memory and to various interfaces of the apparatus. Generally the processor is a central processing unit, but the processor may be an additional operation processor. The processor may com-prise a computer processor, application-specific integrated circuit (ASIC), field-programmable gate array (FPGA), and/or other hardware components that have been programmed in such a way to carry out one or more functions of an embodiment.

The memory 202, 207 may include volatile and/or non-volatile memory and typically stores content, data, or the like. For example, the memory 202, 207 may store computer program code such as software applications (for example for the detector unit and/or for the adjuster unit) or operating systems, information, data, content, or the like for a processor to perform steps associated with operation of the apparatus in accordance with embodiments. The memory may be, for example, random access memory (RAM), a hard drive, or other fixed data memory or storage device. Further, the memory, or part of it, may be removable memory detachably connected to the apparatus.

The techniques described herein may be implemented by various means so that an apparatus implementing one or more functions of a corresponding mobile entity described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g. procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

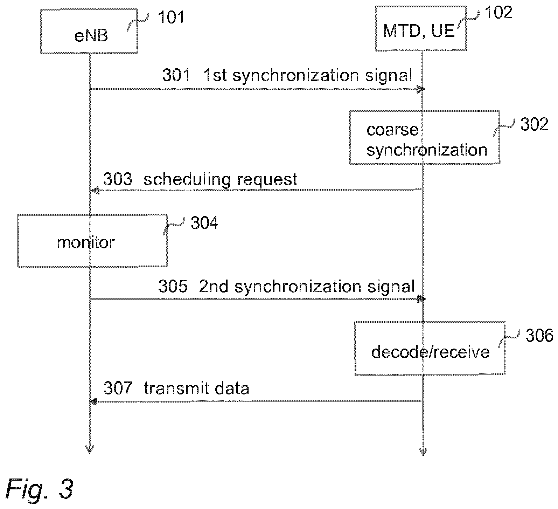

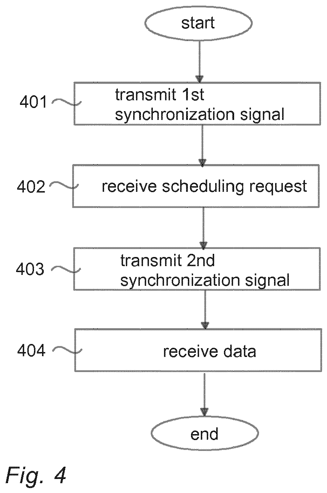

The signalling chart of Figure 3 illustrates the required signalling. In the example of Figure 4, a network node 101 (which may comprise e.g. a LTE/LTE-A-capable base station (eNode-B, eNB) (or a user terminal or a machine type device, acting as a proxy/relay)) may periodically transmit, in item 101, a first synchronization signal to another network element (network node 102, a communications device 102, e.g. a user terminal, UE, or a machine type device, MTD). The communications device 102 may receive, in item 302, the first synchronization signal transmitted from the network apparatus 101. Based on the first synchronization signal, the communications device 102 may perform a coarse synchronization process, and transmit 303 a scheduling request message to the network apparatus 101, based on the coarse synchronization process performed in the communications device 102. The network apparatus 101 receives 304 the scheduling request message transmitted from the communication device 102, and transmits 305 to the communication device 102, a second synchronization signal, together with a scheduling grant, at a predetermined time window with reference to the scheduling request. The communication device 102 receives the second synchronization signal, together with a scheduling grant, from the network apparatus 101, and transmits 307 data to the network apparatus 101, based on the scheduling grant. The network apparatus 101 then receive the data transmitted 307 from the communication device.

Figure 4 is a flow chart illustrating an exemplary embodiment. The apparatus 101, which may comprise e.g. a network element (network node 101, e.g. a LTE/LTE-A base station, eNB (or a user terminal or a machine type device, acting as a proxy/relay)) may define, in item 401, periodically transmit a first synchronization signal to another network element (network node 102, communication device 102, e.g. a user terminal, UE or machine type device). In item 402, the network apparatus 101 may receive a scheduling request message transmitted from the communication device 102 based on a coarse synchronization process carried out in the communications device 102 based on the first synchronization signal. In item 403, the network apparatus 101 may transmit to the communication device 102, a second synchronization signal, together with a scheduling grant, at a predetermined time window with reference to the scheduling request. In item 404, the network apparatus 101 may receive data transmitted from the communication device 102 based on the scheduling grant.

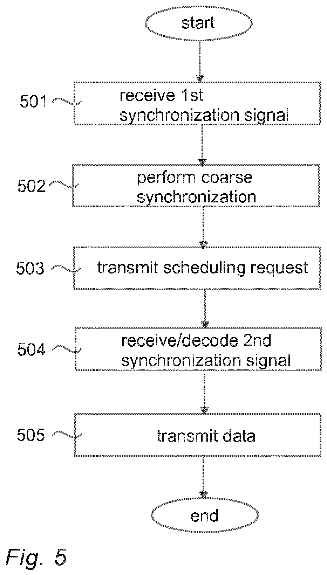

Figure 5 is a flow chart illustrating an exemplary embodiment. The apparatus 102, which may comprise e.g. a network element (network node, communication device, e.g. a user terminal, UE, or a machine type device, MTD) may receive, in item 501, from a network apparatus 101 (which may comprise e.g. a LTE base station eNB 101 (or a user terminal or a machine type device, acting as a proxy/relay)), a first synchronization signal. Based on the first synchronization signal, the communication device 102 may perform 502 a coarse synchronization process. The communication device 102 may transmit 503 a scheduling request message to the network apparatus 101, based on the coarse synchronization process performed in the communications device. The communication device 102 may receive 504, from the network apparatus 101, a second synchronization signal, together with a scheduling grant, at a predetermined time window with reference to the scheduling request. The communication device 102 may then transmit 505 data to the network apparatus 101, based on the scheduling grant.

It should be noted that in an exemplary embodiment the apparatus 101 may be a relay or other UE (which may be referred to as a "further communication device"). Further, in another exemplary embodiment, the first synchronization signal may be transmitted from eNB 101 and the second synchronization signal may be transmitted from a user terminal or machine type device (other than the device 102).

The steps/points, signalling messages and related functions de-scribed above in Figures 1 to 5 are in no absolute chronological order, and some of the steps/points may be performed simultaneously or in an order differing from the given one. Other functions can also be executed between the steps/points or within the steps/points and other signalling messages sent be-tween the illustrated messages. Some of the steps/points or part of the steps/points can also be left out or replaced by a corresponding step/point or part of the step/point. The apparatus operations illustrate a procedure that may be implemented in one or more physical or logical entities. The signalling messages are only exemplary and may even comprise several separate messages for transmitting the same information. In addition, the messages may also contain other information.

Thus, according to an exemplary embodiment, there is provided a method for synchronizing communication devices in a communications system, the method comprising receiving, in a communication device, a first synchronization signal transmitted from a network apparatus; based on the first synchronization signal, performing a coarse synchronization process in the communications device; transmitting a scheduling request message from the communication device to the network apparatus, based on the coarse synchronization process performed in the communications device; receiving, in the communication device from the network apparatus or a further communication device, a second synchronization signal; transmitting data from the communication device to the network apparatus, based on a scheduling grant.

According to another exemplary embodiment, there is provided a method for synchronizing communication devices in a communications system, the method comprising periodically transmitting a first synchronization signal from a network apparatus to a communication device; receiving, in the network apparatus, a scheduling request message transmitted from the communication device based on a coarse synchronization process carried out in the communications device based on the first synchronization signal; wherein a second synchronization signal is transmitted, from the network apparatus or a further communications device to the communication device; wherein the method comprises receiving, in the network apparatus, data transmitted from the communication device based on a scheduling grant.

According to yet another exemplary embodiment, the second synchronization signal is transmitted, together with the scheduling grant, at a predetermined time window with reference to the scheduling request.

According to yet another exemplary embodiment, the second synchronization signal includes accurate information on frame timing, sub-frame timing, time advance and/or network configuration, in order to provide accurate downlink synchronization for the communication device.

According to yet another exemplary embodiment, the coarse synchronization process comprises a minimum synchronization needed to transmit the scheduling request from the communication device and to receive the scheduling grant in the communication device.

According to yet another exemplary embodiment, the second synchronization signal further includes a timing advanced command related to uplink transmission.

According to yet another exemplary embodiment, the minimum synchronization is based on a reference signal associated to demodulation of network-area-specific information.

According to yet another exemplary embodiment, the method comprises using existing signals, such as reference signals, as the first synchronization signal.

According to yet another exemplary embodiment, the method comprises using dedicated and/or common higher layer signalling for providing sufficient information to the communication device about the properties of the first synchronization signal.

According to yet another exemplary embodiment, the first synchronization signal is transmitted within a certain geographical area consisting of multiple cells and/or Tx points.

According to yet another exemplary embodiment, the method comprises activating a low-battery-consumption mode for the communication device (102), after a radio resource control RRC connection has been established between the communication device and the network apparatus.

According to yet another exemplary embodiment, the scheduling request includes a PUCCH format 1/1a/1b signal, a dedicated or contention based random access preamble, and/or a random access message 3.

According to yet another exemplary embodiment, the scheduling request is transmitted based on an initiation by the communication device.

According to yet another exemplary embodiment, the coarse synchronization is initiated in the communication device if the communication device is to listen for paging signals, wherein the scheduling request is transmitted as a response to reception of a paging signal.

According to yet another exemplary embodiment, the communication device comprises a user terminal and/or a machine type device MTD.

According to yet another exemplary embodiment, the network apparatus comprises a base station.

According to yet another exemplary embodiment, the network apparatus comprises a user terminal and/or a machine type device MTD, wherein the method comprises device-to-device D2D communication.

According to yet another exemplary embodiment, the further communication device comprises a user terminal and/or a machine type device MTD.

According to yet another exemplary embodiment, there is provided an apparatus comprising at least one processor; and at least one memory including a computer program code, wherein the at least one memory and the computer program code are configured to, with the at least one processor, cause the apparatus to perform any of the method steps.

According to yet another exemplary embodiment, there is provided computer program product comprising program instructions which, when run on a computing apparatus, causes the computing apparatus to perform the method.

It will be obvious to a person skilled in the art that, as the technology advances, the inventive concept can be implemented in various ways. The invention and its embodiments are not limited to the examples described above but may vary within the scope of the claims.

### List of abbreviations

3GPP 3rd generation partnership project
5G fifth generation
D2D device-to-device communications
DL downlink
eNB, eNode-Benhanced node-B
LTE long term evolution
MTC machine type communication
MTD machine type device
LTE long term evolution
LTE-A LTE-advanced
MTD machine type device
PA power amplifier
PSS primary synchronization signal
RACH random access channel
RRC radio resource control
SR scheduling request
SSS secondary synchronization signal
Tx transmission
UE user equipment
UL uplink

## Claims

1. A method for synchronizing communication devices in a communications system, the method comprising
receiving (302, 501), in a communication device (102), a first synchronization signal periodically transmitted from a network apparatus (101);
based on the first synchronization signal, performing a coarse synchronization process in the communications device (102); obtaining, in the communication device, a minimum synchronization required to send a scheduling request and to receive a scheduling grant and transmitting a scheduling request message from the communication device (102) to the network apparatus (101), based on the coarse synchronization process performed in the communications device (102);
receiving (306, 504), in the communication device (102) from the network apparatus (101) or a further communication device, a second synchronization signal for providing accurate downlink synchronization for the communication device (102), wherein the second synchronization signal is received together with a scheduling grant; obtaining accurate downlink synchronization based on the second synchronization signal and transmitting (307, 505) data from the communication device (102) to the network apparatus (101), based on the scheduling grant.

2. A method for synchronizing communication devices in a communications system, the method comprising
periodically transmitting (301, 401) a first synchronization signal from a network apparatus (101) to a communication device (102);
receiving (304, 402), in the network apparatus (101), a scheduling request message transmitted from the communication device (102), the communication device being coarsely synchronized based on a coarse synchronization process carried out in the communications device (102) based on the first synchronization signal;
wherein a second synchronization signal is transmitted (305, 403), from the network apparatus (101) or a further communications device to the communication device (102) for providing accurate downlink synchronization for the communication device, wherein the second synchronization signal is transmitted together with a scheduling grant; wherein the method comprises receiving (404), in the network apparatus (101), data transmitted from the communication device (102) based on the scheduling grant.

3. A method according to claim 1 or 2, **characterized in that** the second synchronization signal is transmitted (305), together with the scheduling grant, at a predetermined time window with reference to the scheduling request.

4. A method according to claim 1, 2 or 3, **characterized in that** the second synchronization signal includes accurate information on frame timing, sub-frame timing, time advance and/or network configuration, in order to provide accurate downlink synchronization for the communication device (102).

5. A method according to any of claims 1 to 4, **characterized in that** the coarse synchronization process comprises a minimum synchronization needed to transmit the scheduling request from the communication device (102) and to receive the scheduling grant in the communication device (102).

6. A method according to claims 4 or 5, **characterized in that** the second synchronization signal further includes a timing advanced command related to uplink transmission.

7. A method as claimed in claim 5 or 6, **characterized in that** the minimum synchronization is based on a reference signal associated to demodulation of network-area-specific information.

8. A method as claimed in any of claims 1 to 7, **characterized by** using existing signals, such as reference signals, as the first synchronization signal.

9. A method as claimed in any of claims 1 to 8, **characterized by** using dedicated and/or common higher layer signalling for providing sufficient information to the communication device about the properties of the first synchronization signal.

10. A method as claimed in any of claims 1 to 9, **characterized in that** the first synchronization signal is transmitted within a certain geographical area consisting of multiple cells and/or Tx points.

11. A method as claimed in any of claims 1 to 10, **characterized by** activating a low-battery-consumption mode for the communication device (102), after a radio resource control connection has been established between the communication device (102) and the network apparatus (101).

12. A method as claimed in any of claims 1 to 11, **characterized in that** the scheduling request includes a PUCCH format 1/1a/1b signal, a dedicated or contention based random access preamble, and/or a random access message 3.

13. A method as claimed in any of claims 1 to 12, **characterized in that** the coarse synchronization is initiated in the communication device if the communication device is to listen for paging signals, wherein the scheduling request is transmitted as a response to reception of a paging signal.

14. A method as claimed in any of claims 1 to 13, **characterized in that** the communication device (102) comprises a user terminal and/or a machine type device or the network apparatus (101) comprises a base station.

15. A method as claimed in any of claims 1 to 14, wherein the method comprises device-to-device communication.

16. An apparatus comprising at least one processor; and at least one memory including a computer program code, wherein the at least one memory and the computer program code are configured to, with the at least one processor, cause the apparatus (101, 102) to perform any of the method steps of claims 1 - 15.

## Patentansprüche

1. Ein Verfahren zum Synchronisieren von Kommunikationsvorrichtungen in einem Kommunikationssystem, wobei dieses Verfahren umfasst:
Empfangen (302, 501), in einer Kommunikationsvorrichtung (102), eines ersten Synchronisationssignals, das regelmäßig von einer Netzwerkgerät (101) übertragen wird;
Ausführen, auf der Basis des ersten Synchronisationssignals, eines Grobsynchronisationsprozesses in der Kommunikationsvorrichtung (102);
Erzielen, in der Kommunikationsvorrichtung, einer Mindestsynchronisation, die notwendig ist, um eine Ablaufplanungsanforderung zu senden und eine Ablaufplanungsgewährung zu empfangen, und Übertragen einer Nachricht zur Ablaufplanungsanforderung von der Kommunikationsvorrichtung (102) an das Netzwerkgerät (101) auf der Basis des Grobsynchronisationsprozesses in der Kommunikationsvorrichtung (102);
Empfangen (306, 504), in der Kommunikationsvorrichtung (102) von dem Netzwerkgerät (101) oder einem anderen Netzwerkgerät, eines zweiten Synchronisationssignals zum Bereitstellen einer präzisen Downlink-Synchronisation für die Kommunikationsvorrichtung (102), wobei das zweite Synchronisationssignal zusammen mit einer Ablaufplanungsgewährung empfangen wird;
Erzielen einer präzisen Downlink-Synchronisation auf der Basis des zweiten Sychronisationssignals und Übertragen (307, 505) der Daten von der Kommunikationsvorrichtung (102) an das Netzwerkgerät (101) auf der Basis der Ablaufplanungsgewährung.

2. Ein Verfahren zum Synchronisieren von Kommunikationsvorrichtungen in einem Kommunikationssystem, wobei dieses Verfahren umfasst:
regelmäßiges Übertragen (301, 401) eines ersten Synchronisationssignal von einem Netzwerkgerät (101) an eine Kommunikationsvorrichtung (102);
Empfangen (304, 402), im Netzwerkgerät (101), einer Nachricht zur Ablaufplanungsanforderung, die von der Kommunikationsvorrichtung (102) übertragen wird, wobei die Kommunikationsvorrichtung auf der Basis eines Grobsynchronisationsprozesses in der Kommunikationsvorrichtung (102) basierend auf dem ersten Synchronisationssignal grob synchronisiert wird;
wobei das Übertragen (305, 403) eines zweites Synchronisationssignals von einem Netzwerkgerät (101) oder einer anderen Kommunikationsvorrichtung an die Kommunikationsvorrichtung (102) erfolgt, um eine präzise Downlink-Synchronisation für die Kommunikationsvorrichtung bereitzustellen, wobei das zweite Synchronisationssignal zusammen mit einer Ablaufplanungsgewährung übertragen wird;
wobei das Verfahren das Empfangen (404), im Netzwerkgerät (101), der Daten aufweist, die von der Kommunikationsvorrichtung (102) auf der Basis des Ablaufplanungsgewährung übertragen werden.

3. Ein Verfahren nach Anspruch 1 oder 2, **dadurch gekennzeichnet, dass** das zweite Synchronisationssignal zusammen mit der Ablaufplanungsgewährung bei einem vordefinierten Zeitfenster mit Bezug auf die Ablaufplanungsanforderung übertragen wird (305).

4. Ein Verfahren nach Anspruch 1, 2 oder 3, **dadurch gekennzeichnet, dass** das zweite Synchronisationssignal präzise Informationen über Frame-Zeitangabe, Subframe-Zeitangabe, Vorhaltzeit und/oder Netzwerkkonfiguration enthält, um eine präzise Downlink-Synchronisation für die Kommunikationsvorrichtung (102) bereitzustellen.

5. Ein Verfahren nach einem der Ansprüche 1 bis 4, **dadurch gekennzeichnet, dass** der Grobsynchronisationsprozess eine Mindestsynchronisation aufweist, die notwendig ist, um die Ablaufplanungsanforderung von der Kommunikationsvorrichtung (102) zu übertragen und die Ablaufplanungsgewährung in der Kommunikationsvorrichtung (102) zu empfangen.

6. Ein Verfahren nach Anspruch 4 oder 5, **dadurch gekennzeichnet, dass** das zweite Synchronisationssignal weiter einen Timing Advance-Befehl in Verbindung mit der Uplink-Übertragung enthält.

7. Ein Verfahren nach einem der Ansprüche 5 oder 6, **dadurch gekennzeichnet, dass** die Mindestsynchronisation auf einem Referenzsignal basiert, das mit der Demodulation von netwerkbereichsspezifischen Informationen assoziiert ist.

8. Ein Verfahren nach einem der Ansprüche 1 bis 7, **dadurch gekennzeichnet, dass** bestehende Signale, wie Referenzsignale, als erstes Synchronisationssignal verwendet werden.

9. Ein Verfahren nach einem der Ansprüche 1 bis 8, **dadurch gekennzeichnet, dass** eine spezifische und/oder gemeinsame Signalübertragung in höheren Schichten verwendet wird, um ausreichende Informationen über die Eigenschaften des ersten Synchronisationssignals für die Kommunikationsvorrichtung bereitzustellen.

10. Ein Verfahren nach einem der Ansprüche 1 bis 9, **dadurch gekennzeichnet, dass** das erste Synchronisationssignal innerhalb eines bestimmten geographischen Gebiets bestehend aus mehreren Zellen und/oder Tx-Punkten übertragen wird.

11. Ein Verfahren nach einem der Ansprüche 1 bis 10, **dadurch gekennzeichnet, dass** ein Modus mit niedrigem Batterieverbrauch für die Kommunikationsvorrichtung (102) aktiviert wird, nachdem eine Funkressourcensteuerungsverbindung zwischen der Kommunikationsvorrichtung (102) und dem Netzwerkgerät (101) hergestellt wird.

12. Eine Vorrichtung nach einem der Ansprüche 1 bis 11, **dadurch gekennzeichnet, dass** die Ablaufplanungsanforderung ein Signal im PUCCH-Format 1/1a/1b, eine spezifische oder konfliktbasierte Zufallszugriffpräambel und/oder eine Zufallszugriffnachricht 3 enthält.

13. Ein Verfahren nach einem der Ansprüche 1 bis 12, **dadurch gekennzeichnet, dass** die Grobsynchronisation in der Kommunikationsvorrichtung eingeleitet wird, wenn die Kommunikationsvorrichtung auf Rufsignale abzuhören ist, wobei die Ablaufplanungsanforderung als Reaktion auf das Empfangen eines Rufsignals übertragen wird.

14. Ein Verfahren nach einem der Ansprüche 1 bis 13, **dadurch gekennzeichnet, dass** die Kommunikationsvorrichtung (102) ein Benutzerendgerät und/oder eine maschinenartige Vorrichtung aufweist oder das Netzwerkgerät (101) eine Basisstation umfasst.

15. Ein Verfahren nach einem der Ansprüche 1 bis 14, wobei das Verfahren eine Kommunikation von Gerät zu Gerät umfasst.

16. Eine Vorrichtung mit mindestens einem Prozessor, und mindestens einem Speicher mit einem Computerprogrammcode, wobei mindestens ein Speicher und der Computerprogrammcode so konfiguriert sind, dass, in Kombination mit mindestens einem Prozessor, die Vorrichtung (101, 102) dazu gebracht wird, die vorstehenden Schritte des Verfahrens nach Anspruch 1-15 auszuführen.

## Revendications

1. Procédé pour synchroniser des dispositifs de communication dans un système de communication, le procédé comprenant
la réception (302, 501), sur un dispositif de communication (102), d'un premier signal de synchronisation transmis périodiquement à partir d'un appareil de réseau (101) ;
sur la base du premier signal de synchronisation, la réalisation d'un processus de synchronisation grossière sur le dispositif de communication (102) ;
l'obtention, sur le dispositif de communication, d'une synchronisation minimale requise pour envoyer une demande de planification et pour recevoir une autorisation de planification et
la transmission d'un message de demande de planification, du dispositif de communication (102) à l'appareil de réseau (101), sur la base du processus de synchronisation grossière réalisé sur le dispositif de communication (102) ;
la réception (306, 504), sur le dispositif de communication (102) à partir de l'appareil de réseau (101) ou d'un dispositif de communication supplémentaire, d'un deuxième signal de synchronisation pour fournir une synchronisation de liaison descendante précise au dispositif de communication (102), dans lequel le deuxième signal de synchronisation est reçu avec une autorisation de planification ;
l'obtention d'une synchronisation de liaison descendante précise sur la base du deuxième signal de synchronisation et
la transmission (307, 505) de données, du dispositif de communication (102) à l'appareil de réseau (101), sur la base de l'autorisation de planification.

2. Procédé pour synchroniser des dispositifs de communication dans un système de communication, le procédé comprenant
la transmission périodique (301, 401) d'un premier signal de synchronisation, d'un appareil de réseau (101) à un dispositif de communication (102) ;
la réception (304, 402), sur l'appareil de réseau (101), d'un message de demande de planification transmis à partir du dispositif de communication (102), le dispositif de communication étant synchronisé grossièrement sur la base d'un processus de synchronisation grossière effectué sur le dispositif de communication (102) sur la base du premier signal de synchronisation ;
dans lequel un deuxième signal de synchronisation est transmis (305, 403), de l'appareil de réseau (101) ou d'un dispositif de communication supplémentaire au dispositif de communication (102), pour fournir une synchronisation de liaison descendante précise au dispositif de communication, dans lequel le deuxième signal de synchronisation est transmis avec une autorisation de planification ;
dans lequel le procédé comprend la réception (404), dans l'appareil de réseau (101), de données transmises à partir du dispositif de communication (102) sur la base de l'autorisation de planification.

3. Procédé selon la revendication 1 ou 2, **caractérisé en ce que** le deuxième signal de synchronisation est transmis (305), avec l'autorisation de planification, à une fenêtre temporelle prédéterminée en référence à la demande de planification.

4. Procédé selon la revendication 1, 2 ou 3, **caractérisé en ce que** le deuxième signal de synchronisation comporte des informations précises sur un séquencement de trame, un séquencement de sous-trame, une avance de temps et/ou une configuration de réseau, afin de fournir une synchronisation de liaison descendante précise au dispositif de communication (102).

5. Procédé selon l'une quelconque des revendications 1 à 4, **caractérisé en ce que** le processus de synchronisation grossière comprend une synchronisation minimale nécessaire pour transmettre la demande de planification à partir du dispositif de communication (102) et pour recevoir l'autorisation de planification sur le dispositif de communication (102).

6. Procédé selon les revendications 4 ou 5, **caractérisé en ce que** le deuxième signal de synchronisation comporte en outre une commande d'avance de séquencement liée à une transmission de liaison montante.

7. Procédé selon la revendication 5 ou 6, **caractérisé en ce que** la synchronisation minimale est basée sur un signal de référence associé à une démodulation d'informations spécifiques à une zone de réseau.

8. Procédé selon l'une quelconque des revendications 1 à 7, **caractérisé par** l'utilisation de signaux existants, tels que des signaux de référence, comme premier signal de synchronisation.

9. Procédé selon l'une quelconque des revendications 1 à 8, **caractérisé par** l'utilisation d'une signalisation de couche supérieure dédiée et/ou commune pour fournir des informations suffisantes au dispositif de communication sur les propriétés du premier signal de synchronisation.

10. Procédé selon l'une quelconque des revendications 1 à 9, **caractérisé en ce que** le premier signal de synchronisation est transmis à l'intérieur d'une certaine zone géographique constituée de plusieurs cellules et/ou points Tx.

11. Procédé selon l'une quelconque des revendications 1 à 10, **caractérisé par** l'activation d'un mode de faible consommation de batterie pour le dispositif de communication (102), après qu'une connexion de commande de ressources radio a été établie entre le dispositif de communication (102) et l'appareil de réseau (101).

12. Procédé selon l'une quelconque des revendications 1 à 11, **caractérisé en ce que** la demande de planification comporte un signal de format PUCCH 1/1a/1b, un préambule d'accès aléatoire dédié ou basé sur une contention, et/ou un message d'accès aléatoire 3.

13. Procédé selon l'une quelconque des revendications 1 à 12, **caractérisé en ce que** la synchronisation grossière est initiée sur le dispositif de communication si le dispositif de communication doit écouter des signaux de radiomessagerie, dans lequel la demande de planification est transmise en réponse à la réception d'un signal de radiomessagerie.

14. Procédé selon l'une quelconque des revendications 1 à 13, **caractérisé en ce que** le dispositif de communication (102) comprend un terminal d'utilisateur et/ou un dispositif de type machine ou l'appareil de réseau (101) comprend une station de base.

15. Procédé selon l'une quelconque des revendications 1 à 14, dans lequel le procédé comprend une communication de dispositif à dispositif.

16. Appareil comprenant au moins un processeur ; et au moins une mémoire comportant un code de programme informatique, dans lequel l'au moins une mémoire et le code de programme informatique sont configurés pour, avec l'au moins un processeur, amener l'appareil (101, 102) à réaliser l'une quelconque des étapes de procédé des revendications 1 à 15.
